# EUROPEAN PATENT APPLICATION

(11) **EP 2 380 800 A1**
(43) Date of publication of application: **26.10.2011**
(21) Application number: 11155943.1
(22) Date of filing: 25.02.2011
(51) Int. Cl.: B62D 15/02

(54) **Vehicle park assist with steering centering**

(30) Priority: 23.04.2010 US 765983
(71) Applicant: Ford Global Technologies Inc., Dearborn, MI 48126 (US)
(72) Inventor: Toledo, Salvador, New Hudson, MI 48165 (US); Meise, Janet, 50769, Koln (DE); Gunia, Dirk, 50259, Pulheim (DE); Wey, Torsten, 47447, Moers (DE); Recker, Darrel Alan, Ypsilanti, MI 48197 (US); Lavoie, Erick Michael, Dearborn, MI 48124 (US); Weinhold, Volker, 41238, Moenchengladbach (DE)
(74) Representative: Harrison Goddard Foote

(57) **Abstract**

A park assist system for parking a vehicle in a parking space makes steering control inputs and prompts the vehicle driver to make necessary brake and/or gear shift actions to execute a desired steering trajectory. After the vehicle is properly parked, the park assist system actuates the steering system to place it in a centered condition.

## Description

This invention relates to vehicle park assist systems and methods used for automatic or semi-automatic control of a vehicle steering system.

Vehicle park assist systems are used to identify a feasible parking space, e.g., usually a parallel space, a rear perpendicular space, or a garage parking space, and then take over control of the steering of the vehicle to maneuver the vehicle into the identified space hands free. In most such system, during operation of the park assist system the driver retains manual control over the transmission, acceleration, and/or brakes of the vehicle. Thus, while the steering is done automatically, the driver is still responsible for the safe parking of the vehicle.

U.S. Patent Application Serial No. 12/574840, assigned to the assignee of the present application, discloses a park assist system and method of the general type described above.

According to a first aspect of the invention there is provided a system in accordance with Claim 1. According to a second aspect of the invention there is provided a method in accordance with Claim 7.

The present application describes various embodiments of a park assist system and a method for operating a park assist system. In one embodiment, a system for aiding in parking a vehicle in a parking space comprises a sensing system detecting objects that define the parking space, and a control module identifying the parking space, controlling a vehicle steering system, and prompting a vehicle driver to park the vehicle in the parking space. The control module further controls the steering system to achieve a centered condition after the vehicle is properly parked. Returning the steering system to the centered condition allows the driver to move the vehicle forward and/or rearward somewhat as desired without disturbing the proper alignment of the vehicle. It also removes the need for the driver to manually turn the steering wheel while the vehicle is stationary. Having the steering wheel in the centered position is also advantageous since it prevents spokes of the steering wheel from obstructing the driver's view of any displays on the instrument panel that are immediately in front of the steering wheel.

According to another embodiment, a method for parking a vehicle in a parking space comprises using a park assist system including a sensor to scan neighboring objects and detect the parking space, automatically operating a vehicle steering system and prompting a driver to take actions to park the vehicle in the parking space, and after the vehicle is in a parked condition in the parking space, automatically operating the steering system to a centered condition.

Other features and advantages of the park assist system will become apparent to those skilled in the art from the following detailed description, which is provided by way of example only, when read in light of the accompanying drawings.
Figure 1 is a schematic diagram of the operation of a park assist system according to an embodiment of the present invention.
Figure 2 is a schematic diagram of portions of an embodiment of a park assist system.
Figure 3 is a flow chart of an embodiment of a method for parking a vehicle using the park assist system of the present invention.

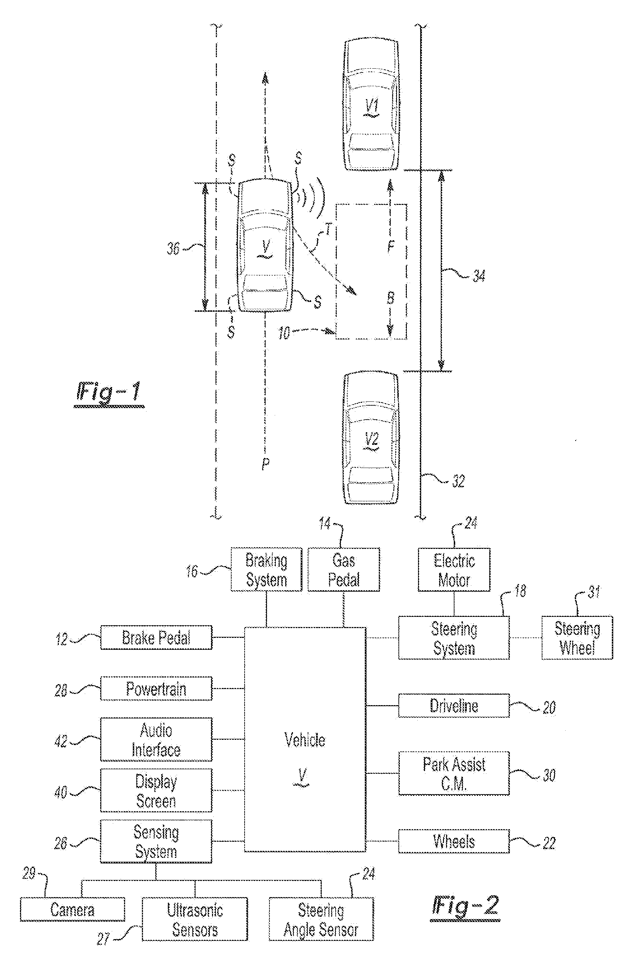

Figure 1 shows schematically a vehicle V alongside a parking space 10 and in the process of following a path P prior to parking using a park assist system. Parking space 10 is shown to be located between two parked vehicles V1 and V2 and further defined by a constraint on the far side, such as a curb 32. A parking space may, however, be defined by any other type and number of objects, features, or constraints in the environment of the vehicle V.

In the exemplary embodiment shown schematically in Figure 2, the vehicle V includes at least the following components or systems: a brake pedal 12, an accelerator pedal 14, a braking system 16, a steering system 18, a driveline system 20, wheels 22, a sensing system 26, a powertrain system 28, and a park assist control module (PACM) 30. Steering system 18 is shown to include an electric motor 24 such as may be used in a power assisted steering (EPAS) system, but the present invention may be applied to any type of steering system, including, for example, a conventional vacuum/hydraulic system, an electro-hydraulic power assisted system (EHPAS), or a "steer-by-wire" system. Vehicle V may also include any other suitable components or systems and only those components or systems which are used for describing and explaining the function and operation of the present invention are illustrated herein.

In the illustrated embodiment, the sensing system 26 is operatively connected to the PACM 30 to provide input signal(s) thereto. Sensing system 26 includes sensors for sensing the vehicle environment, such as ultrasonic sensors 27, optical (artificial vision) sensors 29, radar, lidar, thermal sensors, and/or GPS (not shown). As depicted in Figure. 1, four sensors S may be located on the left and right sides of the vehicle V adjacent front and rear bumpers to provide full or near-full 360° coverage around the vehicle. The number, type, and/or the location of the sensors may be other than illustrated if so desired.

Sensing system 26 may also include sensors for detecting the status or mode of operation of various systems on-board the vehicle V, such as odometric sensors (not shown) and/or a steering wheel angle sensor 24. The odometric sensors may be located on one or more of the wheels 22 of the vehicle V and/or in the driveline system 20 of the vehicle. The steering wheel angle sensor 24 is associated with the steering system 18 of the vehicle and may, for example, be located on a steering wheel 31 or steering column. Alternatively, the construction and/or the components of the sensing system 26 of the vehicle V may be other than illustrated and described if so desired.

The vehicle V may also be equipped with a video display screen 40 for the display of various types of information to the driver. The vehicle V may also include an audio interface device 42 such as a speaker, chime, buzzer, or other device for generating sound.

In the embodiment shown in Fig. 1, the vehicle V is parked into the parking space 10 using the PACM 30. To accomplish this, at least one of the sensors S is used, along with odometric sensors as necessary, to detect neighboring objects and their location relative to the position of the vehicle V as the vehicle travels along path P and passes the objects. In Fig. 1, the neighboring objects that define the parking space 10 are shown as being the two parked vehicles V1 and V2 and an object 32, such as for example, a curb or a wall. If sensing system 26 includes an artificial vision system, object 32 may be any feature discernable by such a vision system, such as a painted line. In any event, one or more of the neighboring objects may be other kinds or types than that which are illustrated and described. It will be understood that the PACM 30 may successfully identify a parking space 10 relative to only one object or vehicle, such as either the vehicle V1 or the vehicle V2, if present and sensed.

PACM 30 includes a data processing component that processes the information from the sensor(s) to evaluate whether the vehicle 10 may be successfully parking in parking space 10. The data processing component may, for example, be a micro-computer based device, as is well known. The evaluation by PACM 30 may involve determining if a valid steering trajectory T can be performed to park the vehicle V in the parking space 10. If a valid steering trajectory T exists, the PACM deems the parking space 10 to be a feasible parking space. The calculations performed by the PACM 30 may include a determination of a required slot length 34 depending upon considerations such as a length 36 of the vehicle V, and/or an achievable turning radius of the vehicle, and/or any other geometric considerations related to the vehicle and/or any other objects in the vicinity of parking space 10.

The movement of the vehicle along the steering trajectory T may be performed in one or more parking maneuvers as may be necessary until it is properly parked. As used herein, one parking maneuver is defined as (1) moving the vehicle rearwardly from a stop into the parking space, (2) stopping the vehicle briefly within the parking space, (3) moving the vehicle forward within the parking space, and (4) then stopping and thus parking the vehicle. At least one actuation or movement of the steering system 18 is usually required in association with each of the steps in the parking maneuver to achieve the required trajectory T. A subsequent rearward and/or forward movement of the vehicle, as may be necessary if the parking space is too short relative to the vehicle length and/or turning radius, defines an additional parking maneuver.

Once it is determined that the vehicle 10 is properly parked in a desired parked condition, the PACM 30 operates the steering system 18 to return it to a centered condition. In the disclosed embodiment, this involves actuating the electric motor 24 to move the steering wheel 31 and associated components of the steering system 18 so that the steerable road wheels of the vehicle are aligned parallel with the longitudinal (front-to-rear) axis of the vehicle. In this condition, the steering wheel 31 will be oriented in a centered condition, so that any spokes or similar structure of the steering wheel are not blocking the driver's view of displays on the instrument panel.

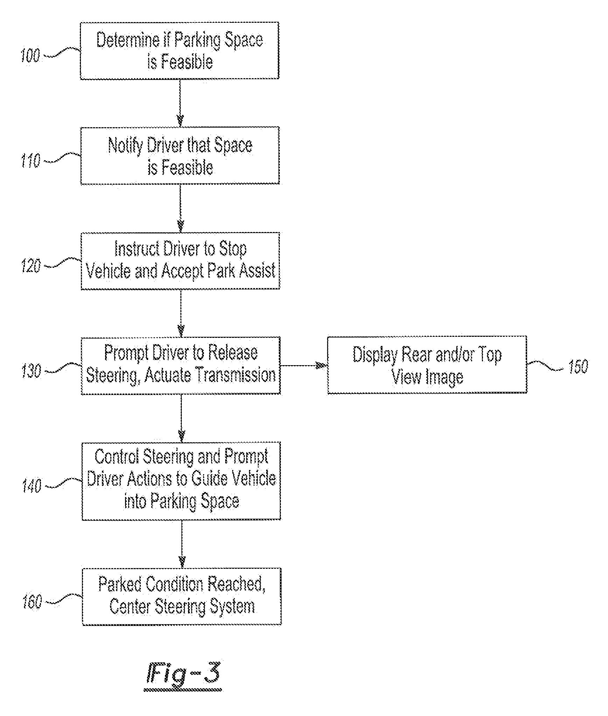

Referring now to Figure 3, a flow chart shows a method for parking a vehicle. At first step 100 a processing module, such as the PACM 30, determines if there is a feasible parking space available for parking of the vehicle V. This may be accomplished, for example, using signals from the any of the sensor(s) of the sensing system 26. A feasible parking space is one that is sufficiently large for the vehicle V to fit into the space using the park assist system with which it is equipped.

If the parking space is determined at step 100 to be feasible for parking, the driver is notified or alerted at step 110 that a feasible parking space is available. The notification may be delivered via a visual and/or audible signal interface. One example of a visual interface that may be used is a text message displayed in a message center in the vehicle instrument panel. Alternatively, the visual interface may be a graphic image, icon, or other non-text representation on a video display screen. Such a visual interface may be located at any appropriate location in the vehicle, such as an overhead console.

Next, at step 120 the driver is instructed to stop the vehicle and to accept the system assistance to park. This instruction may be delivered visually and/or audibly, and may be accomplished by the same interface(s) used in step 110. Once the driver has stopped the vehicle, at step 130 the driver is prompted to remove his or her hands from a steering control device of the steering system (a steering wheel, for example) and to actuate a brake control device (such as a brake pedal) and a transmission control device (such as a gear select lever or button) to engage or shift the transmission of the powertrain system 28 into reverse gear.

At step 140, the park assist system takes over control of the steering system 24 to execute the calculated steering trajectory T. The park assist system generates signals to prompt the driver to take actions necessary to drive the vehicle backwards and pull forward (in one or more parking maneuvers) to achieve a parked condition of the vehicle V in the parking space 10. The parked condition may be defined, depending upon the nature and dimensions of the parking space, as when the vehicle is within a certain distance of one or more of the objects or features that define the space and/or within a certain angular measure of being parallel with the appropriate objects/features.

The driver actions prompted at step 140 may include actions such as actuating a brake control device to control the speed of the vehicle and/or actuating a transmission control device to engage or shift the transmission of the powertrain system 28 between forward and reverse gears.

As indicated at step 150, the method may optionally include displaying to the driver an image of the vehicle and/or parking space environment. For example, an image from a rear view camera 29 may be displayed on a video display screen. In another example, a simulated or virtual top view showing the vehicle and its location relative to the parking space may be displayed. Either of these images may be overlaid with lines and/or other symbols depicting the desired steering trajectory T.

When the park assist system has determined that the vehicle is properly parked and the final movement of the parking maneuver is complete, the method progresses to step 160 where the steering system is operated to place it in a centered condition. This may involve actuating an electric motor that provides power boost to the steering system so as to move the steering wheel along with associated components of the steering system until the steerable vehicle wheels are parallel with the longitudinal axis of the vehicle. Ending the park assist sequence with the steering system centered allows the driver to make any desired forward and/or rearward adjustments to the vehicle's position without concern about whether the steering system is turned to the left or right in a manner that would disturb the alignment of the vehicle. Also, the driver is saved from having to turn the steering wheel manually to achieve the centered condition.

When the steering system is in the centered condition, the steering wheel will be oriented in a centered or upright condition so that any spokes or similar structure of the steering wheel are not blocking the driver's view of displays on the instrument panel.

Although the parking space 10 has been described as a parallel parking space between a forward first object and a rearward second object, the parking space may alternatively be a rear perpendicular parking space, such as found in typical multi-vehicle parking lots and garages. Additionally, the parking space 10 has been described as being on the right side of the vehicle V and the obstacle or vehicle V3 has been described as being on the left side of the vehicle V. Alternatively, the park assist system may be used to identify a parking space on the left side of the vehicle V and identify an obstacle or vehicle V3 on the right side of the vehicle V.

In accordance with the provisions of the patent statutes, the principle and mode of operation of this invention have been described and illustrated in its preferred embodiments. However, it must be understood that this invention may be practiced otherwise than as specifically explained and illustrated without departing from its spirit or scope.

## Claims

1. A system adapted to aid in parking a vehicle in a parking space comprising:
a sensing system detecting objects defining the parking space; and
a control module identifying the parking space, controlling a vehicle steering system, and prompting a driver to park the vehicle in the parking space, the control module further controlling the steering system to achieve a centered condition after the vehicle is properly parked.

2. The system according to claim 1, wherein the sensing system comprises at least one ultrasonic sensor.

3. The system according to claim 1 or 2, wherein the sensing system comprises at least one optical sensor.

4. The system according to any preceding claim, further comprising at least one of a visual interface and an audible interface prompting the driver to operate a vehicle braking system.

5. The system according to any preceding claim, further comprising a camera imaging an area behind the vehicle and a display screen displaying a rearward view to the driver.

6. The system according to any preceding claim, wherein the steering system comprises an electric power assisted steering system and the control module sends control signals to an electric motor associated with the steering system.

7. A method for parking a vehicle in a parking space comprising:
using a park assist system and a related sensor to detect neighboring objects and evaluate the parking space;
automatically operating a vehicle steering system and prompting a driver to take actions to move the vehicle into the parking space; and
after the vehicle is in a parked condition in the parking space, automatically operating the steering system to a centered condition.

8. The method according to claim 7, wherein the step of automatically operating a vehicle steering system comprises controlling an electric motor associated with at least one of an electric power assisted steering system and an electro-hydraulic power assisted steering system.

9. The method according to claim 7 or 8, wherein the sensor comprises an ultrasonic sensor.

10. The method according to any of claims 7 to 9, wherein the sensor comprises an optical sensor.

11. The method according to any of claims 7 to 10, wherein the step of prompting the driver comprises instructing the driver to actuate at least one of a brake control device and a transmission control device.

12. The method according to any of claims 7 to 11, wherein the step of prompting the driver comprises generating at least one of a visual signal and an audible signal.

13. The method according to any of claims 7 to 12, further comprising operating a camera to image an area behind the vehicle and displaying to the driver a rearward view from the camera.

14. The method according to any of claims 7 to 13, further displaying to the driver a virtual top view showing the vehicle and a vehicle location relative to the parking space.
